# EUROPÄISCHE PATENTSCHRIFT

(11) **EP 1 616 382 B1**
(45) Veröffentlichungstag und Bekanntmachung des Hinweises auf die Patenterteilung: **22.05.2013**
(21) Anmeldenummer: 04721499.4
(22) Anmeldetag: 18.03.2004
(51) Int. Cl.: H02J 7/14

(54) **ENERGIEVERSORGUNGSSYSTEM F R EIN FAHRZEUG**
POWER SUPPLY SYSTEM FOR A VEHICLE
SYSTEME D'ALIMENTATION EN ENERGIE CON U POUR UN VEHICULE

(30) Priorität: 24.04.2003 DE 10318494
(43) Veröffentlichungstag der Anmeldung: 18.01.2006
(73) Patentinhaber: Bayerische Motoren Werke Aktiengesellschaft, 80809 München (DE)
(72) Erfinder: KRANZ, Herbert, 86919 Utting (DE)
(86) Internationale Anmeldenummer: PCT/EP2004/002811
(87) Internationale Veröffentlichungsnummer: WO 2004/095671

(56) Entgegenhaltungen:
- DE-A- 19 816 052
- US-A- 5 194 799
- US-A- 6 016 047

## Beschreibung

Die Erfindung betrifft ein Energieversorgungssystem für ein Fahrzeug, bei dem ein Spannungsbordnetz zur Versorgung elektrischer Verbraucher von mindestens einem Energiespeicher speisbar ist, und bei dem an das Spannungsbordnetz externe elektrische Verbraucher anschließbar sind.

Die fest installierten Energiespeicher in Fahrzeugen sind für die Versorgung des Spannungsbordnetzes des Fahrzeugs ausgelegt. Zusätzlich sind meistens Anschlüsse vorgesehen, an denen externe Verbraucher anschließbar sind. Diese Verbraucher werden entweder über die Fahrzeugbatterie direkt betrieben oder verfügen im Falle von Mobilfunktelefonen über einen eigenen Energiespeicher, der über die Fahrzeugbatterie aufladbar ist. Es können auch Vorrichtungen, beispielsweise eine Freisprecheinrichtung, vorgesehen sein, bei denen über eine reine Ladefunktion hinaus, auch relevante Daten zwischen Verbraucher und Fahrzeug, bzw. Spannungsbordnetz, austauschbar sind.

Aus der DE 198 16 052 A1 ist eine Halterung für tragbare Mobiltelefone bekannt. Die Halterung weist einen Energieversorgungsanschluss auf, der beim Einschieben des Mobiltelefons in einen Schacht, dieses mit einer externen Energieversorgungsquelle (Fahrzeugbatterie) verbindet. Weiterhin weist die Halterung einen Ladeanschluss auf, der beim Einschieben des Mobiltelefons in den Schacht einen Energiespeicher des Mobiltelefons mit einem externen oder in der Halterung integrierten Ladegerät verbindet.

Nachteilig wirkt sich aus, dass die Halterung nur mit einem Mobiltelefon betrieben werden kann. Zudem ist die Halterung fest in einer Konsole des Fahrzeugs integriert und der mobile Energiespeicher des Mobiltelefon ist nur für das Mobiltelefon selbst nutzbar. Darüber hinaus haben Akkus in Handys allgemein eine zu geringe Kapazität um sie anderweitig nutzen zu können. Für weitergehende Anwendungen, beispielsweise den Betrieb eines Notebooks, ist die Halterung, bzw. der Energiespeicher des Mobiltelefons, daher nicht geeignet.

Aus der DE 199 25 570 C2 ist ein Kommunikationssystem für ein Fahrzeug bekannt. Das Kommunikationssystem weist eine Kommunikationsplattformeinheit zur variablen Anbindung einer oder mehrerer Anwendungseinheiten an mehrere Funkkommunikationskanäle auf. Damit kann ein Mobilfunkgerät beispielsweise auf dem je nach räumlichen Gebiet jeweils gerade vorteilhaftesten Mobilfunkkanal betrieben werden. Der Kommunikationsplattformeinheit kann eine Reservebatterie zugeordnet sein, mit der die Kommunikationsplattformeinheit bei einem Ausfall der Hauptbatterieversorgung weiterbetrieben werden kann.

Nachteilig wirkt sich aus, dass die Reservebatterie nur als Notversorgung für die Kommunikationsplattformeinheit ausgelegt ist. Eine Handhabung für andere Verbraucher ist jedoch nicht vorgesehen. Daher ist die Kommunikationsplattformeinheit mit der Reservebatterie anderweitig nicht verwendbar.

Weiterhin ist aus der DE 199 07 003 A1 ist eine Systembox für den Einsatz in Fahrzeugen bekannt, die Aufnahmefächer für Bürogeräte aufweist. Die Systembox kann über die fahrzeugeigene Batterie betrieben werden und verfügt zusätzlich über einen 220 V -Netzanschluss.

Nachteilig wirkt sich aus, dass die Fahrzeugbatterie, bzw. der energieerzeugende Generator, durch den Betrieb der Systembox stark belastet wird. Insbesondere stößt die Fahrzeugbatterie bei einer Nutzung, beispielsweise eines PC, über einen längeren Zeitraum im Stand, d.h. bei nicht im Betrieb befindlichen Fahrzeug, schnell an ihre Leistungsgrenze. Der Netzanschluss ist nur bei einer in der Nähe erreichbaren Netzsteckdose verwendbar. Die mobile Nutzbarkeit der Systembox ist daher relativ eingeschränkt und unflexibel.

Aus der US 5 194 799 A ist ein Energieversorgungssystem für ein Fahrzeug mit den Merkmalen des Oberbegriffs des Anspruchs 1 bekannt.

Aus der US 6 016 047 A ist ein tragbarer Wechselspeicher mit einem Battteriemangementsystem bekannt, das den Lade- und Entladestrom steuert.

Aufgabe der vorliegenden Erfindung ist es, ein Energieversorgungssystem für Fahrzeuge zu entwickeln, dass für verschiedene anschließbare Verbraucher, auch bei nicht in Betrieb befindlichem Fahrzeug, flexibel und ausdauernd nutzbar ist.

Die Aufgabe wird durch die Merkmale des Anspruchs 1 gelöst. Vorteilhafte Ausführungsformen sind Gegenstand der abhängigen Ansprüche.

Dadurch, dass der Wechselspeicher vorgesehen ist, steht dem Anwender eine sehr vielseitig einsetzbare Energiespeichererweiterung zur Verfügung, die der Anwender wahlweise im Fahrzeug oder als mobile tragbare Energieversorgung nutzen kann. Das Batteriemanagementsystem dient im Wesentlichen zur Steuerung und Überwachung des Ladeprozesses und des Betriebes des Wechselspeichers. Über das Batteriemanagementsystem wird der Ladevorgang, bzw, die Leistungsabgabe aus dem Spannungsbordnetz an den Wechselspeicher geregelt. Ebenso kann aber auch über das Batteriemanagementsystem, die Fahrzeugelektronik, bzw. das Spannungsbordnetz, die Leistung des Wechselspeichers anfordern. Der Wechselspeicher kann so die Fahrzeugbatterie unterstützen und die Leistungsfähigkeit des Energieversorgungssystems des Fahrzeugs erweitern. Damit ist es möglich auch bei nicht in Betrieb befindlichem Fahrzeug über einen längeren Zeitraum externe Geräte im Fahrzeug zu betreiben. Es ist auch denkbar, dass die Energiespeichererweiterung das Spannungsbordnetz des Fahrzeugs für bestimmte Funktionen höherwertiger bordnetzzugehöriger Verbraucher, beispielsweise bei einem Startvorgang, unterstützt oder zum Betrieb von elektrischen Einrichtungen des Fahrzeuges, die auch in einem Ruhezustand des Fahrzeugs vor einem Startvorgang betätigt werden sollen, eingesetzt wird. Der Wechselspeicher kann dabei die Fahrzeugbatterie entlasten. Der tragbare Wechselspeicher kann auch aus dem Fahrzeug mitgenommen werden und bestimmte Geräte an beliebigen Orten mit Energie versorgen. Damit ist er mobil und flexibel einsetzbar.

Erfindungsgemäß ist im Fahrzeuginnenraum des Fahrzeugs eine Einschubvorrichtung angeordnet, in die mindestens ein Wechselspeicher als ein Einschub einsteckbar ist.

Eine Einschubvorrichtung, beispielsweise ein genormter Einschub in einer Fahrzeugkonsole, ist besonders praktikabel und platzsparend zur Unterbringung des Wechselspeichers im Fahrzeug geeignet In der Einschubvorrichtung können vorzugsweise die zur Verbindung mit dem Bordnetz nötigen Anschlüsse des Wechselspeichers als Steckverbindungen integriert sein.

Gemäß einer bevorzugten Ausführungsform der Erfindung sind die externen Verbraucher der Gruppe der Bürogeräte, Kommunikationsmittel und Unterhaltungselektronik zugehörig.

Der Wechselspsicher ist besonders zur Versorgung von Büromitteln und dergleichen geeignet Das efindungsgemäße Energieversorgungssystem wird damit dem steigenden Bedarf nach mobiler Nutzung derartiger Mittel gerecht. Beispielsweise kann der Anwender die Energiespeichererweiterung für Bürofunktionen sowohl im Fahrzeug als auch zu Hause oder bei externen Besprechungen unterwegs nutzen. Dadurch wird es möglich, beispielsweise ein Notebook unterwegs ausgiebig zu nutzen ohne zwischenzeitlich auf einen Netzanschluss angewiesen zu sein. Ein entladener Wechselspeicher kann über das Fahrzeug wieder aufgeladen werden und steht dann erneut uneingeschränkt zur Verfügung. Weiterhin ist es auch möglich, energieintensive Unterhaltungsgeräte, beispielsweise ein Fernsehgerät, bei abgestelltem Fahrzeug, über einen längeren Zeitraum zu betreiben. Es ist auch denkbar, mobile mitgeführte Haushaltsgeräte über den Wechselspeicher zu betreiben.

Gemäß einer weiteren bevorzugten Ausführungsform der Erfindung ist das Batteriemanagementsystem in dem Wechselspeicher integriert

Die Integration des Batteriemanagementsystems in dem Wechselspeicher ist kostensparend, da der Aufwand an Erweiterungen an der Fahrzeugelektronik selbst minimiert wird. Dadurch fallen insbesondere bei einem möglichen Austausch eines Wechselspeichers durch einen anderen Wechselspeicher mit anderen Spezifikationen, keine umfangreichen Servicearbeiten an der Fahrzeugelektronik an oder müssen aufwendige Umstellungen vorgenommen werden. Weiterhin kann das integrierte Batteriemanagementsystem zur Regelung der Leistungsversorgung eines an den Wechselspeicher angeschlossenen Gerätes im mobilen Betrieb unabhängig vom

Fahrzeug dienen. Das integrierte Batteriemanagementsystem erfüllt damit eine Doppelfunktion, im Fahrzeug und unabhängig vom Fahrzeug, vereinigt in einem System.

Nach einer weiteren bevorzugten Ausführungsform der Erfindung sind über das Batteriemanagementsystem speicherrelevante Parameter zwischen dem Wechselspeicher und dem Spannungsbordnetz bidirektional austauschbar.

Dadurch, dass über das Batteriemanagementsystem Parameter mit dem Spannungsbordnetz bidirektional austauschbar sind, können einerseits dem Fahrzeug wichtige Speicherdaten mitgeteilt werden und kann andererseits die Energiespeichererweiterung mit dem Bordnetz optimal abgestimmt werden. Vorzugsweise ist ein CAN - Datenbussystem zur Steuerung und für den Datenaustausch vorgesehen. Es kann eine Speichercodierung vorgesehen sein. Insbesondere ist der Ladezustand des Wechselspeichers dem Spannungsbordnetz mitteilbar. Es ist auch möglich, dass über das Batteriemanagementsystem die Versorgung des Wechselspeichers mit elektrischer Energie durch das Spannungsbordnetz priorisierbar gegenüber anderen Funktionen ist. Weiterhin kann das Batteriemanagementsystem eine Begrenzungsfunktion aufweisen, so dass bei der Versorgung des Wechselspeichers eine vorgegebene maximale Spannung und Stromstärke nicht überschreitbar ist. Die Begrenzungsfunktion kann auch einen Überlastungsschutz aufweisen, der eine Überlastung des Wechselspeichers bei der Versorgung von Verbrauchern vermeidet. In dem Wechselspeicher kann zusätzlich eine Sicherung eingebaut sein, die bei einer Überlastung auslöst. Durch die Begrenzungsfunktion wird ein Auslösen dieser Sicherung im Normalbetrieb verhindert. Es ist auch möglich, dass das Batteriemanagementsystem eine Sperrfunktion aufweist, so dass die in dem Wechselspeicher gespeicherte Energie nur für bestimmte vorgegebene Funktionen abrufbar ist. Weiterhin kann die Speichererweiterung auch mit Zeitfunktionen versehen werden. Eventuelle sogenannte "Package" - Verluste durch den, bzw. die Zusatzspeicher, können nach Wegfall des Bedarfs wieder ausgeglichen werden.

Gemäß einer weiteren bevorzugten Ausführungsform der Erfindung ist der Wechselspeicher über ein externes Netzgerät ladbar. Dadurch kann der Wechselspeicher auch zusätzlich zur Möglichkeit der Ladung über das Bordnetz, mittels eines entsprechenden Ladegerätes an der üblichen 220 V - Netzspannung aufgeladen werden. Dadurch ist der Wechselspeicher noch vielseitiger handhabbar. Der Anwender kann die Speichererweiterung, praktisch wo immer eine Energieversorgung zugänglich ist, wieder aufladen.

Nach einer weiteren bevorzugten Ausführungsform der Erfindung ist der Wechselspeicher als eine Lithiumionen - Polymerbatterie ausgebildet.

Lithiumionen - Polymerbatterien sind besonders als Wechselspeicher geeignet. Sie sind sehr leistungsfähig, haben ein geringes Gewicht und eine kompakte Bauform. Derartige Batterien sind bereits im Handel erhältlich. Sie werden beispielsweise unter der Bezeichnung PowerPadTM , mit den typischen Spezifikationen: Abmessung: DIN A4 x 9,5 mm, Gewicht: 1,15 kg, Leistung: 11 Ah, (160 Wh, 15 V), von der Firma Electrovaya, Toronto, Kanada, als Energiespeichererweiterung für Laptops (bis zu 16 Stunden Betriebsdauer) angeboten. Derartige Polymerbatterien können als Wechselspeicher für das erfindungsgemäße Energieversorgungssystem für ein Fahrzeug umfunktioniert werden. Ggf. mitgeführte herkömmliche, schwere und unpraktikable Bleisäurebatterien als Zusatzbatterien zum Betreiben von externen Geräten werden überflüssig.

Gemäß einer weiteren bevorzugten Ausführungsform sind mehrere, an verschiedene Anwendungen jeweils angepasste, Wechselspeicher vorgesehen. Dadurch, dass mehrere Wechselspeicher vorgesehen sind, kann jeweils die Speichererweiterung mit den günstigsten Spezifikationen für eine jeweilige Anwendung ausgewählt werden. Es ist auch möglich, dass mehrere Geräte gleichzeitig betrieben werden.

Weitere Einzelheiten der Erfindung ergeben sich aus der nachfolgenden ausführlichen Beschreibung und der beigefügten Zeichnung, in der eine bevorzugte Ausführungsform der Erfindung beispielsweise veranschaulicht ist.

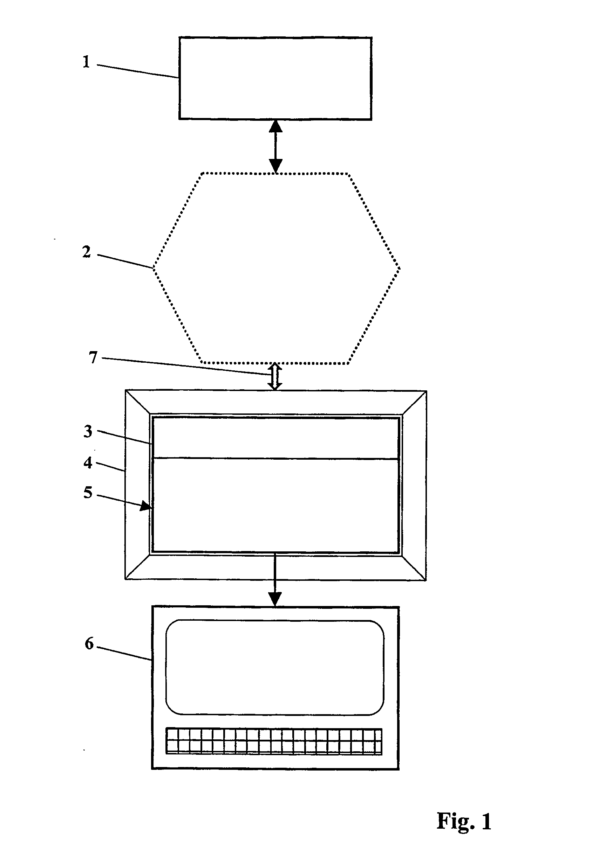

Es zeigt
- Figur 1:: Ein Blockdiagramm eines Energieversorgungssystems eines Fahrzeugs mit einem Wechselspeicher.

Ein Energieversorgungssystem für ein Fahrzeug besteht im Wesentlichen aus einem Spannungsbordnetz 2 und einem Wechselspeicher 5.

Das Spannungsbordnetz 2 des Fahrzeuges wird durch eine Fahrzeugbatterie 1, beispielsweise als ein herkömmlicher elektrochemischer wiederaufladbarer 12 V - Energiespeicher auf Bleisäure - Basis ausgebildet, versorgt. Im Fahrzeuginnenraum, beispielsweise in einer Konsole, ist eine Einschubvorrichtung 4 angeordnet, in die der, bzw. die Wechselspeicher 5, vorteilhaft als ein hochleistungsfähiger Energiespeicher, der in einer Lithiumionen - Polymerbatterie - Bauweise ausgebildet ist, einschiebbar ist / sind. Die Einschubvorrichtung 4 weist (nicht dargestellte) Anschlüsse zum Aufladen des Wechselspeichers 5 über das Spannungsbordnetz 2 auf. Weitere Anschlüsse an höherwertige Bordnetzfunktionen für den Wechselspeicher 5, bzw. die Energiespeichererweiterung, sind vorgesehen und bereitgestellt. Die Anschlüsse sind vorteilhaft als Steckverbindungen ausgebildet, die beim Einschieben des Wechselspeichers 5 in die Einschubvorrichtung 4, mit entsprechend speicherseitig vorgesehenen Steckanschlüssen verbunden werden. Zudem können vorzugsweise mehrere Energiespeichererweiterungen angeschlossen werden. Der Datenaustausch und die Steuerung zwischen Spannungsbordnetz 2 und Wechselspeicher 5 findet vorteilhaft über ein CAN - Datenbussystem 7 statt. Für die Steuerung der Ladefunktionen, des Datenaustauschs und der Leistungsabgabe ist ein Batteriemanagementsystem 3 vorgesehen, das in dem Wechselspeicher 5 integriert ist.

An den Wechselspeicher 5 sind externe Verbraucher 6, beispielsweise ein Notebook, anschließbar. Der Wechselspeicher 5 kann einen oder mehrere externe Verbraucher 6 versorgen. Über den Datenbus 7 und die entsprechenden Anschlüsse kann der Wechselspeicher 5 mit Hilfe des Batteriemanagementsystems 3 auch zur Unterstützung der Versorgung des Spannungsbordnetzes 2, bzw. der Fahrzeugbatterie 1 herangezogen werden. Bei Bedarf kann der Wechselspeicher 5 aus der Einschubvorrichtung 4 herausgezogen werden und als leichte und einfach handhabbare mobile Energiespeichererweiterung für geeignete Geräte verwendet werden.

### Bezugszeichenliste

| | |
|---|---|
| 1 | Energiespeicher |
| 2 | Spannungsbordnetz |
| 3 | Batteriemanagementsystem |
| 4 | Einschubvorrichtung |
| 5 | Wechselspeicher |
| 6 | Verbraucher |
| 7 | Datenbus |

## Patentansprüche

1. Energieversorgungssystem für ein Fahrzeug, bei dem ein Spannungsbordnetz zur Versorgung elektrischer Verbraucher von mindestens einem Energiespeicher speisbar ist, und bei dem an das Spannungsbordnetz externe elektrische Verbraucher anschließbar sind, **dadurch gekennzeichnet,**
- **dass** mindestens ein tragbarer, über das Spannungsbordnetz (2) des Fahrzeuges aufladbarer Wechselspeicher (5) vorgesehen ist, der als eine über ein Batteriemanagementsystem (3) ansteuerbare Energiespeichererweiterung ausgebildet ist, über die fahrzeugeigene und / oder externe elektrische Verbraucher betreibbar sind, so dass der Wechselspeicher (5) wahlweise bei angeschlossenem Spannungsbordnetz (2) in dem Fahrzeug als eine stationäre Energieversorgungseinrichtung oder bei nicht angeschlossenem Spannungsbordnetz (2) unabhängig von dem Fahrzeug als eine mobile Energieversorgungseinrichtung nutzbar ist, und
- im Fahrzeuginnenraum des Fahrzeugs eine Einschubvorrichtung (4) angeordnet ist, in die der mindestens eine Wechselspeicher (5) als ein Einschub einsteckbar ist.

2. Energieversorgungssystem nach Anspruch 1, **dadurch gekennzeichnet, dass** die externen Verbraucher (6) der Gruppe der Bürogeräte, Kommunikationsmittel und Unterhaltungselektronik zugehörig sind.

3. Energieversorgungssystem nach einem der Ansprüche 1 oder 2, **dadurch gekennzeichnet, dass** das Batteriemanagementsystem (3) in dem Wechselspeicher (5) integriert ist.

4. Energieversorgungssystem nach einem der Ansprüche 1 bis 3, **dadurch gekennzeichnet, dass** über das Batteriemanagementsystem (3) speicherreievante Parameter zwischen dem Wechselspeicher (5) und dem Spannungsbordnetz (2) bidirektional austauschbar sind.

5. Energieversorgungssystem nach einem der Ansprüche 1 bis 4, **dadurch gekennzeichnet, dass** über das Batteriemanagementsystem (3) der aktuelle Ladezustand des Wechselspeichers (5) dem Spannungsbordnetz (2) mitteilbar ist.

6. Energieversorgungssystem nach einem der Ansprüche 1 bis 5, **dadurch gekennzeichnet, dass** über das Batteriemanagementsystem (3) die Versorgung des Wechselspeichers (5) mit elektrischer Energie durch das Spannungsbordnetz (2) priorisierbar ist.

7. Energieversorgungssystem nach einem der Ansprüche 1 bis 6, **dadurch gekennzeichnet, dass** das Batteriemanagementsystem (3) eine Begrenzungsfunktion aufweist, so dass bei der Versorgung des Wechselspeichers (5) eine vorgegebene maximale Spannung und Stromstärke nicht überschreitbar ist.

8. Energieversorgungssystem nach Anspruch 7, **dadurch gekennzeichnet, dass** die Begrenzungsfunktion einen Überlastungsschutz aufweist, so dass eine vorgegebene maximale Belastung des Wechselspeichers (5) nicht überschreitbar ist.

9. Energieversorgungssystem nach einem der Ansprüche 1 bis 8, **dadurch gekennzeichnet, dass** das Batteriemanagementsystem (3) eine Sperrfunktion aufweist, so dass die in dem Wechselspeicher (5) gespeicherte Energie nur für vorgegebene Funktionen abrufbar ist.

10. Energieversorgungssystem nach einem der Ansprüche 1 bis 9, **dadurch gekennzeichnet, dass** der Wechselspeicher (5) über ein externes Netzgerät ladbar ist.

11. Energieversorgungssystem nach einem der Ansprüche 1 bis 10, **dadurch gekennzeichnet, dass** der Wechselspeicher (5) als eine Lithiumionen - Polymerbatterie ausgebildet ist.

12. Energieversorgungssystem nach einem der Ansprüche 1 bis 11, **dadurch gekennzeichnet, dass** mehrere, an verschiedene Anwendungen jeweils angepasste, Wechselspeicher (5) vorgesehen sind.

## Claims

1. A power supply system for a vehicle, in which an onboard voltage supply system for supplying electric loads can be fed by at least one power accumulator, and in which external electric loads can be connected to the onboard voltage supply system, **characterised in that**
- at least one portable removable accumulator (5) is provided, which can be charged by the onboard voltage supply system (2) of the vehicle and is configured as a power accumulator extension, which can be activated by a battery management system (3) and by means of which electric loads that are particular to the vehicle and/or external can be operated, so the removable accumulator (5) can be selectively used in the vehicle as a stationary power supply device when the onboard voltage supply system (2) is connected or can be used independently of the vehicle as a mobile power supply device when the onboard voltage supply system (2) is not connected, and
- a slide-in device (4), into which the at least one removable accumulator (5) can be inserted as a slide-in unit, is arranged in the interior of the vehicle.

2. A power supply system according to claim 1, **characterised in that** the external loads (6) belong to the group of office equipment, communication means and entertainment electronics.

3. A power supply system according to either of claims 1 or 2, **characterised in that** the battery management system (3) is integrated in the removable accumulator (5).

4. A power supply system according to any one of claims 1 to 3, **characterised in that** accumulator-relevant parameters can be bidirectionally exchanged between the removable accumulator (5) and the onboard voltage supply system (2) by means of the battery management system (3).

5. A power supply system according to any one of claims 1 to 4, **characterised in that** the current charge state of the removable accumulator (5) can be reported to the onboard voltage supply system (2) by means of the battery management system (3).

6. A power supply system according to any one of claims 1 to 5, **characterised in that the** supply of the removable accumulator (5) with electric power by the onboard voltage supply system (2) can be prioritised by means of the battery management system (3).

7. A power supply system according to any one of claims 1 to 6, **characterised in that** the battery management system (3) has a limiting function, so that a predetermined maximum voltage and current intensity cannot be exceeded when the removable accumulator (5) is being supplied.

8. A power supply system according to claim 7, **characterised in that** the limiting function has overload protection, so a predetermined maximum loading of the removable accumulator (5) cannot be exceeded.

9. A power supply system according to any one of claims 1 to 8, **characterised in that** the battery management system (3) has a blocking function, so that the power stored in the removable accumulator (5) can only be accessed for predetermined functions.

10. A power supply system according to any one of claims 1 to 9, **characterised in that** the removable accumulator (5) can be charged by means of an external power supply unit.

11. A power supply system according to any one of claims 1 to 10, **characterised in that** the removable accumulator (5) is configured as a lithium ion polymer battery.

12. A power supply system according to any one of claims 1 to 11, **characterised in that** a plurality of removable accumulators (5) in each case adapted to various applications are provided.

## Revendications

1. Système d'alimentation en énergie d'un véhicule selon lequel le réseau de bord peut être alimenté par au moins un accumulateur d'énergie pour alimenter un utilisateur électrique et des utilisateurs électriques externes peuvent être raccordés au réseau de bord,
système **caractérisé en ce qu'**
- au moins un accumulateur interchangeable (5) portatif, rechargeable par le réseau de bord (2) du véhicule est réalisé comme extension d'accumulateur d'énergie, commandé par un système de gestion de batterie (3) par lequel les utilisateurs électriques internes au véhicule et/ou externes peuvent être alimentés de sorte que l'accumulateur interchangeable (5) peut être utilisé au choix lorsqu'il est raccordé au réseau de bord (2) du véhicule comme installation fixe d'alimentation en énergie ou lorsqu'il n'est pas raccordé au réseau de bord du véhicule (2), comme installation mobile, d'alimentation en énergie, indépendante du véhicule, et
- l'habitacle du véhicule comporte un dispositif à tiroir (4) dans lequel au moins un accumulateur interchangeable (5) se glisse comme un tiroir.

2. Système d'alimentation en énergie selon la revendication 1, **caractérisé en ce que**
les utilisateurs externes (6) font partie du groupe comprenant des équipements de bureau, des moyens de communication et des équipements électroniques de loisir.

3. Système d'alimentation en énergie selon la revendication 1 ou 2, **caractérisé en ce que**
le système de gestion de batterie (3) est intégré dans l'accumulateur interchangeable (5).

4. Système d'alimentation en énergie selon l'une des revendications 1 à 3,
**caractérisé en ce que**
le système de gestion de batterie (3) permet l'échange bidirectionnel de paramètres concernant l'accumulation d'énergie entre l'accumulateur interchangeable (5) et le réseau de bord embarqué (2).

5. Système d'alimentation en énergie selon l'une des revendications 1 à 4,
**caractérisé en ce que**
l'état de charge actuelle de l'accumulateur interchangeable (5) est communiqué au réseau de bord (2) par le système de gestion de batterie (3).

6. Système d'alimentation en énergie selon l'une des revendications 1 à 5,
**caractérisé en ce que**
le système de gestion de batterie (3) donne la priorité à l'alimentation de l'accumulateur interchangeable (5) en énergie électrique par le réseau embarqué (2).

7. Système d'alimentation en énergie selon l'une des revendications 1 à 6,
**caractérisé en ce que**
le système de gestion de batterie (3) a une fonction de limitation pour ne pas dépasser une tension et une intensité maximales prédéfinies lors de l'alimentation de l'accumulateur interchangeable (5).

8. Système d'alimentation en énergie selon la revendication 7, **caractérisé en ce que**
la fonction de limitation comporte une protection de surcharge pour ne pas dépasser une charge maximale prédéfinie de l'accumulateur interchangeable (5).

9. Système d'alimentation en énergie selon l'une des revendications 1 à 8,
**caractérisé en ce que**
le système de gestion de batterie (3) a une fonction de blocage de sorte que l'énergie stockée dans l'accumulateur interchangeable (5) ne peut être demandée que pour des fonctions prédéfinies.

10. Système d'alimentation en énergie selon l'une des revendications 1 à 9,
**caractérisé en ce que**
l'accumulateur interchangeable (5) se charge par un appareil de réseau externe.

11. Système d'alimentation en énergie selon l'une des revendications 1 à 10,
**caractérisé en ce que**
l'accumulateur interchangeable (5) est une batterie lithium-ion-polymère.

12. Système d'alimentation en énergie selon l'une des revendications 1 à 11,
**caractérisé par**
plusieurs accumulateurs interchangeables (5) adaptés à différentes applications.
